(19) Europäisches Patentamt
European Patent Office
Office européen des brevets

(11) Publication number: 0 268 392
A2

# (12) EUROPEAN PATENT APPLICATION

(21) Application number: 87309379.3

(22) Date of filing: 23.10.87

(51) Int. Cl.[4]: C08L 59/00 , C08K 5/16 , //(C08L59/00,77:00)

(30) Priority: 23.10.86 US 922388

(43) Date of publication of application: 25.05.88 Bulletin 88/21

(84) Designated Contracting States: AT BE CH DE ES FR GB GR IT LI LU NL SE

(71) Applicant: CELANESE ENGINEERING RESINS, INC.
26 Main Street
Chatham, New Jersey(US)

(72) Inventor: Auerbach, Andrew
23 Orchard Lane
Livingstone New Jersey(US)
Inventor: O'Brien, David P.
735 Sheridan Avenue
Plainfield New Jersey(US)

(74) Representative: De Minvielle-Devaux, Ian Benedict Peter et al
CARPMAELS & RANSFORD 43, Bloomsbury Square
London WC1A 2RA(GB)

## (54) Stabilized oxymethylene polymer compositions.

(57) Stabilized copolymer compositions which comprise an oxymethylene copolymer, and a stabilizing amount of a stabilizer system comprising at least one amidine compound having a pK greater than about 7 and at least one superpolyamide compound.

EP 0 268 392 A2

Xerox Copy Centre

# STABILIZED OXYMETHYLENE POLYMER COMPOSITIONS

## BACKGROUND OF THE INVENTION

The present invention relates to oxymethylene polymer compositions. More particularly, the present invention relates to oxymethylene polymer compositions that contain stabilizing amounts of (a) at least one amidine compound having a pK greater than about 7 and (b) at least one superpolyamide compound, and which exhibit superior resistance to polymer chain cleavage caused by acid catalysis, improved thermal stability, and lower extractable formaldehyde.

Oxymethlene polymers consisting essentially of recurring $-CH_2O-$units, i.e., oxymethylene homopolymers and oxymethylene copolymers, i.e., oxymethylene polymers having recurring $-CH_2O-$units interspersed with carbon-to-carbon single bonds, have been known for may years.

Oxymethylene copolymers, which are particularly adapted for use in the molding compositions of the present invention, are those which are prepared as described in U.S. Patent No. 3,027,352 of Walling et al by copolymerizing, for example, trioxane with any of various cyclic ethers having at least two adjacent carbon atoms, e.g., ethylene oxide, dioxolane, and the like.

The usefulness of oxymethylene copolymers in molding compositions has also been known for years. For example, U.S. Patent No. 3,275,604 discloses a moldable polymer comprising oxymethylene groups and oxyethylene groups, with said oxymethylene groups having a $-CH_2OR$ group pendant therefrom, which may be prepared by polymerizing a source of oxymethylene units such as trioxane with a glycidyl ether.

U.S. Patent No. 3,313,767, assigned to the assignee of the present invention, discloses the use of one or more amidine compounds, e.g., cyanoguanidine and melamine, as a thermal stabilizer package for oxymethylene polymer compositions.

U.S. Patent No. 3,480,694 discloses compositions that include polyoxymethylenes, a superpolyamide, and either melamine or tri tolyl cyanurate.

U.S. Patent No. 3,444,625 discloses compositions which comprise an oxymethylene-oxyethylene copolymer, a linear polyamide such as the interpolymer of nylon 6,6/nylon 6,10/nylon 6, and a solid fusible diphenylamine-acetone condensation product.

U.S. Patent No. 3,524,832 describes a stabilized polyacetal composition. The stabilizer system for the composition comprises (a) 0.1 percent to 5 percent by weight of certain alkyldiphenylamines and (b) 0.01 to 20 percent of a nitrogen-containing compound selected from the group consisting of seven compounds and mixtures thereof. The possible nitrogen-containing compounds include certain superpolyamides and cyanoguanidines.

U.S. Patent No. 4,506,053 discloses a stabilized acetal resin composition comprising (A) an acetal resin, (B) certain cyanic acid esters, (C) an amine-substituted triazine and/or a cyanoguanidine compound, and (D) certain fillers.

Other U.S. patents that disclose the stabilization of oxymethylene polymers by polyamides or cyanoguanidines include U.S. Patents Nos. 3,626,024; 3,969,292; and 4,088,629. References that broadly teach the stabilization of oxymethylene type resins include U.S. Patent Nos. 3,314,918; 3,316,207;3,960,984; 3,971,757 and 4,386,178.

Acidic additives to oxymethylene polymer compositions, such as certain well-known pigments, low wear additives, minerals, glasses, and impact modifiers create polymer stability problems because polymer chains cleave as a result of acid catalysis. This cleavage, sometimes referred to as "unzipping," also occurs when oxymethylene copolymer is subjected to heating to elevated temperatures such as 230°C. Many of the patents cited above are directed to solving the stability problems associated with the propensity of the oxymethylene polymer to unzip. See. e.g., U.S. Patent No. 3,444,265.

The search for stable oxymethylene polymer compositions that, e.g., are resistant to polymer chain cleavage has been continuous, and, hence, the discovery of such a stabilized composition would be of great benefit to the art.

Accordingly, it is an object of the present invention to provide an oxymethylene polymer composition that exhibits excellent stability, including resistance to polymer chain cleavage due to acid catalysis.

It is another object of the present invention to provide an oxymethylene polymer composition that is stable upon heating to elevated temperatures.

It is still another object of the present invention to provide a stable oxymethylene polymer composition that includes acidic additives.

It is still another object of the present invention to provide an oxymethylene polymer stabilizer system which is stable under heat aging/hot water conditions in the presence of acidic species.

These and other objects, as well as scope, nature, and utilization of the claimed invention, will be apparent to those skilled in the art from the following description and appended claims.

## SUMMARY OF THE INVENTION

It has now been found that an oxymethylene copolymer composition which exhibits enhanced thermal stability and resistance to polymer chain cleavage comprises an intimate mixture or blend of:
an oxymethylene polymer and a stabilizing amount of stabilizer system comprising

a) at least one amidine compound having a pK greater than about 7; and

b) at least one superpolyamide compound.

In a preferred embodiment, the stabilized oxymethylene polymer composition of the present invention comprises an oxymethylene polymer and a stabilizer system comprising at least one amidine compound having a pK greater than about 7, and at least one superpolyamide compound; wherein the equivalent weight ratio of the amidine compound to the superpolyamide compound is in the range of from about 10:1 to about 1:5.

In another preferred embodiment, the stabilized oxymethylene polymer composition of the present invention comprises a stabilizing amount of a stabilizer system comprising cyanoguanidine and a terpolymer of nylon 6, nylon 6,6 and nylon 6,10.

In another preferred embodiment, the stabilized oxymethylene polymer composition of the present invention comprises a stabilizer system comprising cyanoguanidine and a terpolymer of nylon 6, nylon 6,6 and nylon 6,10; and wherein the equivalent weight ratio of cyanoguanidine to the terpolymer is about 1:1.

## DESCRIPTION OF THE PREFERRED EMBODIMENTS

### OXYMETHYLENE POLYMER

The oxymethylene polymer employed in the compositions of the present invention may be a homopolymer or copolymer containing oxymethylene units. The oxymethylene homopolymer can be conventionally produced, for example, by using a formaldehyde monomer or trioxane as a starting material. Oxymethylene copolymers are preferred.

The preferred oxymethylene copolymer used in the molding composition of the present invention is known in the art and possesses a relatively high level of polymer crystallinity, i.e., about 70 to 80 percent. Such oxymethylene copolymers have repeating units which consist essentially of (a) $-OCH_2$-groups interspersed with (b) groups represented by the general formula:

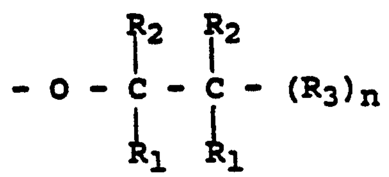 ,

wherein each $R_1$ and $R_2$ is selected from the group consisting of hydrogen, lower alkyl and halogen-substituted lower alkyl radicals, each $R_3$ is selected from the group consisting of methylene, oxymethylene, lower alkyl and haloalky-substituted oxymethylene radicals, and n is an integer from zero to three inclusive.

Each lower alkyl radical preferably has from one to two carbon atoms, inclusive. The $-OCH_2$-units of (a) constitute from about 85 to about 99.9 weight percent, preferably about 98 weight percent of the recurring units. The units copolymerization to produce the copolymer by the opening of the ring of a cyclic ether having adjacent carbon atoms by the breaking of an oxygen-to-carbon linkage, and preferably constitute about 2 weight percent of the recurring units.

Polymers of the desired structure may be prepared by polymerizing trioxane together with from about 0.1 to about 15 mole percent of a cyclic ether having at least two adjacent carbon atoms, preferably in the presence of a catalyst such as a Lewis acid (e.g., $BF_3$, $Pf_5$, etc.) or other acids (e.g., $HClO_4$), 1% $H_2SO_4$, etc.).

In general, the cyclic ethers employed in making the oxymethylene copolymer are those represented by the general formula:

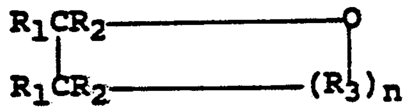 ,

wherein each $R_1$ and $R_2$ is selected from the group consisting of hydrogen, lower alkyl and halogen-substituted lower alkyl radicals, and each $R_3$ is selected from the group consisting of methylene, oxymethylene, lower alkyl and haloalkyl-substituted methylene and lower alkyl and haloalkyl-substituted oxymethylene radicals, and n is an integer from zero to three inclusive. Each lower alkyl radical preferably has from one to two carbon atoms inclusive.

The preferred cyclic ethers used in the preparation of the oxymethylene copolymers are ethylene oxide and 1,3-dioxolane, which may be represented y the formula:

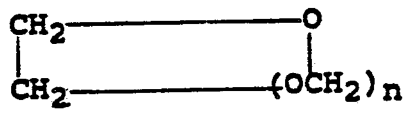

wherein n represents an integer from zero to two, inclusive. Other cyclic ethers that may be employed are 1,3-dioxane, trimethylene oxide, 1,2-propylene oxide, 1,2-butylene oxide, 1,3-butylene oxide and 2,2-di-(chloromethyl)-1,3-propylene oxide.

The preferred catalyst used in preparing the oxymethylene copolymer is the aforementioned boron trifluoride as discussed in the previously identified Walling et al patent. Reference is made to this patent for further information concerning the polymerization conditions, amount of catalyst employed, etc.

The oxymethylene copolymers produced from the preferred cyclic ethers have a structure composed substantially of oxymethylene and oxyethylene groups in a ratio of from about 6 to 1 to about 1000 to 1.

The oxymethylene copolymers that are present in the molding compositions of this invention are thermoplastic materials having a melting point of at least 150°C., and normally are millable or processable at a temperature of about 200°C. They have a number average molecular weight of at least 10,000. The preferred oxymethylene copolymers have an inherent viscosity of at least 1.0 (measured at 60°C. in a 0.1 weight percent solution in p-chlorophenol containing 2 weight percent of alphapinene).

The oxymethylene copolymer component of the composition of this invention preferably is an oxymethylene copolymer that has been preliminarily stabilized to a substantial degree. Such stabilizing technique may take the form of stabilization by degradation of the molecular ends of the polymer chain to a point where a relatively stable carbon-to-carbon linkage exists at each end. For example, such degradation may be effected by hydrolysis as disclosed in United States Patent No. 3,219,623, to Frank M. Berardinelli which is assigned to the same assignee as the present invention, and by this cross-reference is made a part of the disclosure of the instant application.

If desired, the oxymethylene copolymer may be end-capped by techniques known to those skilled in the art. A preferred end-capping technique is accomplished by acetylation with acetic anhydride in the presence of sodium acetate catalyst. A most preferred oxymethylene copolymer is commercially available from Celanese Plastics and Specialties Company under the designation CELCON acetal copolymer.

In the stabilized oxymethylene polymer compositions of the present invention, the oxymethylene polymer represents the balance of the composition once the components of the stabilizer system and any other conventional additives are taken into account. Typically, the oxymethylene polymer is present in compositions that do not include a filler in an amount from about 96 to about 99.5, preferably, from about 98 to about 99.3, and most preferably, from about 98.5 to about 99.1 weight percent based on the total weight of the composition.

## STABILIZER SYSTEM

The stabilizer system of the present invention comprises at least one amidine compound having a pK greater than about 7 and at least one superpolyamide compound.

Amidine compounds, i.e., compounds that have a carbon atom doubly bonded to one nitrogen atom and singly bonded to another nitrogen atom, that can be utilized in the present oxymethylene polymer

compositions are those that have a pK greater than about seven. Also, if the amidine compound decomposes at the processing temperature of the oxymethylene polymer composition, it can be utilized in the compositions of the present invention if its decomposition products have a pK of greater than about seven.

This includes a wide variety of amidines compounds such as certain guanidine compounds, e.g., guanidine itself (pK greater than 13.5); certain triazine compounds, e.g., 2,4,6-triguanidine 1,3,5-triazine (pK = 10.3); certain ureas, e.g., O-methyl-urea (pK = 9.72); and other amidine compounds, such as those disclosed in U.S. Patent No. 3,313,767, the content of which is hereby incorporated by reference, that have or whose decomposition product have the requisite pK.

Preferred amidine compounds are the cyanguanidines disclosed in U.S. Patent No. 3,313,767, and include those containing the divalent 1-cyano-3,3 guanidino radical represented by the following formula:

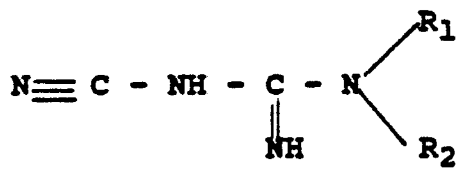

Among the suitable cyanoguanidines are those having one or two suitable inert substituents at the 3-nitrogen position of the guanidine nucleus. For example, in the above formula, $R_1$ and $R_2$ are identical or different inert substituents including hydrogen, alkyl, cycloalkyl, hydroxyalkyl or aryl, haloalkyl, haloaryl, and other substituents. Suitable inert substituents are defined as those which will not induce undesirable reactions.

Specific examples of the cyanoguanidines include cyanoguanidine, cyano-3-methylguanidine, 1-cyano-3-ethylguanidine, 1-cyano-3-isopropylguanidine, 1-cyano-3,3-piphenylguanidine, 1-cyano-3-hydroxymethylguanidine, and 1-cyano-3-(2-hydroxy ethyl) guandidine. The most preferred cyanoguanidine is cyanoguanidine itself and is commercially available from American Cyanamid under the designation CNG.

A wide variety of superpolyamide compounds also may be utilized in the present compositions. These superpolyamide compounds include conventional condensation products of lactams amine/acids, or combinations thereof. For example, the superpolyamide compound of the stabilizer system of the composition of the present invention may include superpolyamides that are formed by the condensation of dicarboxylic acids with diamines or by the polymerization of -aminomonocarboxylic acids. These superpolyamides have a degree of polymerization in the range of about 100 to 200 C. The superpolyamide compounds preferably have melting points below about 220°C., more preferably below the melting point of the oxymethylene copolymer, i.e., 150°C. Other superpolyamides that may be used in the stabilizer system to stabilize high molecular weight formaldehyde polymers in accordance with this invention are the condensation products of the following diamines and dicarboxylic acids: pentamethylenediamine/malonic acid, pentamethylenediamine/pimelic acid, hexamethylenediamine/adipic acid, hexamethylenediamine/sebacic acid, N,N′-hydroxymethylhexamethylenediamine/adipic acid, N,$N^1$-methoxymethylhexamethylenediamine/adipic acid, octamethylenediamine/suberic acid, 1,1,6,6-tetramethylenehexamethylenediamine/sebacic acid, decamethylenediamine/sebacic acid, dodecanemethylenediamine/2,2,5,5-tetramethyladipic acid, and 2,5-dimethylpiperazine/glutaric acid. Alternatively, the stabilizer system may contain superpolyamides which are the products obtained by polymerizing an -aminomonocarboxylic acid, such as 6-aminocaproic acid, 9-aminomonanoic acid, 11-aminoundecanoic acid, or its lactomer superpolyamides which are copolymers or terpolymers.

Preferred superpolyamides have melting or softening points below that of the melting point of the oxymethylene polymer. These include terpolymer polyamides, copolymers such as nylon 6 and nylon 6,6, and long chain polyamides such as nylon 12. The most preferred superpolyamide is a terpolymer of nylon 6, nylon 6,6, and nylon 6,10 commercially available from E.I. du Pont de Nemours & Co. under the designation Elvamide 8063.

Other higher melting superpolyamides could be used, but such use would require higher composition processing temperatures or predispersion of the superpolyamides. Predispersion techniques are described in commonly assigned United States Patent Application Serial No. 664,796, filed October 25, 1984, and in U.S. Patent No. 4,098,843, the contents of which are hereby incorporated by reference.

The superpolyamides may also contain conventional additives, such as a sodium hypophosphite heat stabilizer, so long as these additives do not materially affect the enhanced stability attained by the composition of the present invention. Also, typically, it is desired that the components of the stabilizer

system not impart color to the oxymethylene polymer composition.

In the present composition, the stabilizer system, i.e., the aforedescribed amidine and superpolyamide compounds, is present in an amount sufficient to impart the desired enhanced stability to the composition. Preferably, the amounts of the amidine compound and the superpolyamide compound in the stabilizer system are specified as a ratio of their equivalent weights. the "equivalent weight" of a compound is a well-known method of measurement calculated by dividing the molecular weight of the compound by the number of reactive sites available within that compound. In compositions of the present invention, the equivalent weight ratio of the amidine compound to the superpolyamide compound, i.e., the equivalent weight of the amidine compound divided by the equivalent weight of the superpolyamide compound, is in the range of from about 10:1 to about 1:5, and, in order of preference, from about 8:1 to about 1:3, about 6:1 to about 1:2, about 2:1 to about 1:2, and, most preferably, about 1:1. Within these equivalent weight ratios, the amidine compound of the stabilizer system may be present in the molding compositions of the present invention in an amount of from about .01 to about 1.0 weight percent, preferably from about .02 to about 0.2 weight percent, and, most preferably, from about .04 to about 0.1 weight percent. As with all weight percents expressed herein, these percentages are based upon the total weight of the composition. The superpolyamide compound of the stabilizer system may be present in the molding compositions of the present invention in an amount of from about .01 to about 2 weight percent, preferably from about .05 to about .5 weight percent, and most preferably from about .1 to about .4 weight percent.

## OTHER COMPONENTS

The molding composition of the present invention may further include a mold lubricant. Suitable mold lubricants include alkylene bisstearamide, long-chain amides, waxes, oils, and polyether glycides. The preferred mold lubricant is alkylene bisstearamide and is available from Glyco Chemical, Inc., under the designation Acrawax C. The mold lubricant may be present in an amount of from about 0.1 to about 1 weight percent.

The molding composition of the present invention may also further include minor amounts of other standard additives present in oxymethylene polymer molding compositions, so long as such additives do not materially affect the enhanced stability attained by the composition of the present invention. Such additives include fillers such as high surface area conductive carbon, colorants, reinforcing agents, and impact modifiers.

A surprising advantage of the present invention is the enhanced thermal stability of the oxymethylene polymer in an acidic environment. For example, acidic additives such as catalyst residues (e.g., $BF_3$), carbon black, certain impact modifiers, minerals, glasses, coupling agents, flame retardents, various pigments, low wear additives like $MoS_2$, and certain antistatic agents have created stability problems because of the tendency of the oxymethylene polymer to unzip as a result of acid catalysis. Essentially, an acidic component of an oxymethylene polymer composition participates in the degradation of the oxymethylene polymer under certain well-known pH/time/temperature conditions. This disadvantage is overcome by the use in the present invention of a stabilizer system comprising the aforementioned stabilizing amounts of at least one amidine compound and at least one superpolyamide compound. Further, if catalyst residues or formic acid levels in the oxymethylene polymer itself are high, if the polymer is not properly hydrolyzed system, or if low amounts of comonomer are employed, the stabilizer system of the present invention will provide enhanced stability to the polymer itself.

## PREPARATION OF MOLDING COMPOSITIONS OF THE PRESENT INVENTION

The molding compositions of the present invention can be prepared by simply intimately blending or mixing the various components in their desired amounts using conventional means. It is to be understood that whenever the weight percentages of the various additive components of the molding compositions of the present invention are cited herein, the aforedescribed oxymethylene polymer is present in such amount as to make up the balance of the composition, i.e., to make the weight percentages sum to 100%. While the superpolyamide compounds preferably have melting points below about 220°C., if such melting point is greater than the melting point of the oxymethylene polymer or the compositions's processing temperature, typically about 140°C., predispersion techniques are necessary to ensure adequate mixing. Such predispersion techniques are described in commonly assigned United States Patent Application Serial No. 664,796, filed October 25, 1984, and in U.S. Patent No. 4,098,843 the contents of which are hereby incorporated by

reference. Even if the melting point of the superpolyamide is below about 140°C., it is preferred to use the predispersion techniques. Mixing can be accomplished with conventional extrusion equipment maintained at a temperature of from 180°C. to 220°C. The components can be rear or side fed, with the screw design, etc. being optimized to provide uniform and effective blending of the components. A preferred blending technique involves the dry preblending of the components of the stabilizer system, and any other components, and introducing this preblend to the oxymethylene copolymer at the feed throat of the extruder.

The molding compositions of the invention can then be comminuted mechanically, for example by chopping or grinding, into granules, chips, flakes or powders, and processed in the thermoplastic state, for example by injecting molding or extrusion, into shaped articles, for example, bars, rods, plates, sheets, films, ribbons and tubes.

A most preferred method of making compositions of the present invention is to extrude or compound the cyanoguanidine compound and the superpolyamide compound with the acidic additive and any filler, and then molding the resulting pellets into a finished article.

It surprisingly has been found that oxymethylene polymer compositions of the present invention, that is, oxymethylene polymer compositions comprising an oxymethylene polymer and a stabilizing amount of a stabilizer system comprising at least one suitable amidine compound and a superpolyamide compound, exhibit vastly improved resistance to degradation by acid catalysis, thermal stability, color stability, and extractable formaldehyde when compared to oxymethylene copolymer compositions that include either an amidine compound or a superpolyamide compound.

In particular, it has now been discovered that the combination of the aforementioned amounts of at least one amidine compound and at least one superpolyamide compound imparts to oxymethylene polymer far superior resistance to polymer chain cleavage caused by acid catalysis as compared to the additive effect of these compounds taken individually. While not desirous of being constrained to any particular scientific theory, it is believed that the superpolyamide preferentially acts as a formaldehyde scavenger. Superpolyamide compounds function effectively as formaldehyde scavengers and only weakly as acid scavengers. Amidine compounds function effectively as both acid and formaldehyde scavengers. If the amidine compound reacts with formaldehyde a thermoset adduct is generated and the amidine compound can no longer function as an acid scavenger. Apparently, when a superpolyamide compound is combined with a suitable amidine compound in an oxymethylene polymer composition, the superpolyamide compound preferentially scavenged formaldehyde, leaving the amidine compound to function effectively as an acid scavenger.

Furthermore, it has unexpectedly been found that not all amidine compounds function properly in combination with a superpolyamide compound in the stabilizer system of the present invention so as to impart enhanced stability to the oxymethylene polymer compositions. That is, oxymethylene polymer compositions that contain a superpolyamide and an amidine that has or whose decomposition products have pK's of less than about 7, such as melamine, wherein the equivalent weight ratio of the amidine compound to the superpolyamide compound is about 1:1, have been found to exhibit inferior thermal stability as compared to oxymethylene polymer compositions of the present invention. While not desirous of being constrained to any particular scientific theory, it is believed that such amidine compounds or their decomposition products are too weak bases to effectively serve as acid scavengers in the stabilizer system of the present invention.

The following Examples are given as specific illustrations of the claimed invention. It should be understood, however, that the specific details set forth in the examples are merely illustrative and in nowise limitative. All parts and percentages in the Examples and the remainder of the specifica tion are by weight of the total composition unless otherwise specified.

EXAMPLE 1

The oxymethylene polymer was a trioxane-ethylene oxide copolymer containing about 98 weight percent of recurring $-OCH_2$-groups and about 2 weight percent of comonomer units derived from ethylene oxide having the formula $-OCH_2CH_2$-. the oxymethylene copolymer was prepared as previously has been described herein and more specifically in the aformentioned United States Patent No. 3,027,352 to Walling et al, and had been hydrolyzed to stabilize the ends of the polymer chains. The oxymethylene copolymer possessed a crystallinity of approximately 75 percent, a number average molecular weight of approximately 35,000, an inherent viscosity (I.V.) of approximately 1.3 (measured at 60°C. in a 0.1 weight percent solution in p-chlorophenol containing 2 weight percent of alphapinene), a melting temperature of 165°C., and a melt

index of approximately 9.0 g/10 min. when tested in accordance with ASTM D1238-57T.

Included in the oxymethylene copolymer compositions were varying amounts of cyanoguanidine and an interpolymer of nylon 6, nylon 6,6 and nylon 6,10 commercially available under the designation Elvamide 8063 from E.I. duPont de Nemours & Co. Elvamide 8063 terpolymer is an terpolymer of caprolactam, hexamethylene diamine, adipic acid, and sebacic acid.

The oxymethylene copolymer molding compositions also included $MoS_2$, an acidic low wear additive. Other components of the composition included conventional amounts of the following standard additives: 1,6-hexamethylene bis-(3,5-di-t-butyl-4-hydroxyhydrocinnamate), commercially available from Ciba-Geigy Corp. under the designation Irganox 259; alkylene bisstearamide, commercially available from Glyco Chemical as Acrawax C mold lubricant; and a terpolymer available from the Celanese Corporation under the designation U10-11, which is a butanediol diglycidyl ether/ethylene oxide/trioxane terpolymer containing about 0.5 weight percent, 2.0 weight percent, and 97.95 weight percent of each component respectively, and including 0.5% Irganox 259 and 0.1% calcium ricinoleate.

The following oxymethylene copolymer molding compositions were conventionally compounded at 140°C. in a 1.5" Johnson extruder Serial No. 40 39TI and conventionally molded by a 150 ton MACO 4 ounce Cincinnati injection molding machine Serial No. 400/-21/79-36:

## TABLE I

### Percent by Weight of Total Composition

| Composition | Oxymethylene Copolymer | $MoS_2$ | Irganox 259 | Acrawax C | U10-11 | Elvamide 8063 | Cyanoguanidine |
|---|---|---|---|---|---|---|---|
| A | 96.95 | 2.0 | 0.50 | 0.20 | 0.25 | - | 0.10 |
| B | 96.05 | 2.0 | 0.50 | 0.20 | 0.25 | 1.00 | - |
| C | 96.55 | 2.0 | 0.50 | 0.20 | 0.25 | 0.50 | - |
| D | 96.80 | 2.0 | 0.50 | 0.20 | 0.25 | 0.25 | - |
| 1* | 96.75 | 2.0 | 0.50 | 0.20 | 0.25 | 0.25 | 0.05 |

*The equivalent weight ratio of cyanoguanidine to Elvamide 8063 is about 1:1.

Each composition was evaluated for thermal oxidative stability, $K_d$, which corresponds to the percent per minute of weight loss of the composition at 230°C. over a period of 45 minutes.

The determination of $K_d$ utilized an apparatus consisting of a forced draft oven containing a cylindrical aluminum block, 4 in. high and 14 in. in diameter, as a heat sink. The block was provided with six recesses, 1/2 in. deep and 2 1/4 in. in diameter, to accommodate aluminum dishes containing polymer samples. A thermocouple inserted in the block was connected to a recorder-controller system capable of maintaining the block temperature to within ± 0.25°C. over the range 200-270°C.

A guided lid, providing 1 in. of space above the samples when resting on the block, was lifted by a pulley and cable arrangement as the oven door was opened and lowered as the door was closed. A 1/8 in. hole drilled into the top surface of the block and out the side, provided a vent for degradation products to displace the air and escape. Thus, there was limited access of air above the sample; in this respect, the environment to which the polymer was subjected tends toward that prevailing in the barrel of a polymer-processing machine, such as an extruder or injection molding apparatus.

The samples were dried at 100°C. and 25 in. of mercury vacuum for three hours. A sample (5 g.) was accurately weighed (to 0.2 mg.) in a disposable aluminum dish, and placed in the block recess. After 45 min. the sample was removed, cooled in a desiccator to room temperature, and weighed. The percent weight loss, divided by 45 min., gave a $K_d$ value which is the average percent weight loss per minute at 230°C. The coefficient of variation for values determined by this method was 4-7%. The results are listed in Table II.

**TABLE II**

| Composition | $K_d$ |
|---|---|
| A | 0.20 |
| B | 0.30 |
| C | 0.50 |
| D | 0.90 |
| 1 | 0.05 |

It can be seen from Table II that the oxymethylene composition of the present invention, i.e., Composition 1, exhibits a vastly decreased value for $K_d$ as compared to Controls A-D. The total compositions differ only in that Control A contains only cyanoguanidine in an amount of 0.10% by weight; Controls B-D contain only the superpolyamide in various amounts; while Composition 1 contains both a superpolyamide compound in an amount equal to that in Control C, and cyanoguanidine, in an amount equal to one-half of that in Control A. Yet Composition 1 exhibits from a four-fold decrease in $K_d$ over Control A to an 18 fold decrease over Control D. Such a radical, multiplicative decrease in $K_d$ enables the composition of the present invention to deliver unexpectedly superior stability against polymer chain cleavage caused by acid catalysis as compared to Controls B-D.

EXAMPLE 2

The oxymethylene copolymer of Table III compositions were compounded as in Example 1.

TABLE III

Percent by Weight of Total Composition

| Composition | Ocymethylene Copolymer | Flake Pigment Concentrate Color* | Irganox 259 | Acrawax C | U10-01 | Elvamide 8063 | Cyanoguanidine |
|---|---|---|---|---|---|---|---|
| E | 98.55 | White | 0.50 | 0.20 | 0.50 | 0.25 | — |
| F | 98.55 | Red | 0.50 | 0.20 | 0.50 | 0.25 | — |
| G | 98.55 | Green | 0.50 | 0.20 | 0.50 | 0.25 | — |
| H | 98.55 | Brown | 0.50 | 0.20 | 0.50 | 0.25 | — |
| I | 98.55 | Yellow | 0.50 | 0.20 | 0.50 | 0.25 | — |
| 2** | 98.51 | White | 0.50 | 0.20 | 0.50 | 0.25 | 0.04 |
| 3** | 98.51 | Red | 0.50 | 0.20 | 0.50 | 0.25 | 0.04 |
| 4** | 98.51 | Green | 0.50 | 0.20 | 0.50 | 0.25 | 0.04 |
| 5** | 98.51 | Brown | 0.50 | 0.20 | 0.50 | 0.25 | 0.04 |
| 6** | 98.51 | Yellow | 0.50 | 0.20 | 0.50 | 0.25 | 0.04 |
| J | 98.70 | White | 0.50 | 0.20 | 0.50 | — | 0.10 |
| K | 98.70 | Red | 0.50 | 0.20 | 0.50 | — | 0.10 |
| L | 98.70 | Green | 0.50 | 0.20 | 0.50 | — | 0.10 |
| M | 98.70 | Brown | 0.50 | 0.20 | 0.50 | — | 0.10 |
| N | 98.70 | Yellow | 0.50 | 0.20 | 0.50 | — | 0.10 |

* Standard acidic pigment flake concentrates present in a 1:20 ratio by weight of the remainder of the composition.

** The equivalent weight ratio of cyanoguanidine to Elvamide 8063 is about 1:1.

These compositions were evaluated for thermal stability by a determination of their thermal oxidative stability ($K_d$), melt index, and extractable formaldehyde. Table IV includes the results of the evaluations.

Melt index is a measure of the loss in molecular weight of the copolymer during processing. Molecular weight loss by the copolymer results in a reduction in melt viscosity and the increasing flow rate measured by the melt index. Melt index was measured with an Extrusion Plastometer. The procedure was essentially equivalent to ASTM D-1238-73. The Plastometer measured the flow rate per ten minutes of oxymethylene copolymer composition through a .0825 inches diameter by .315 inches length capil lary at 190°C from a .376 inches diameter cylinder under a 2,160 grams dead weight.

Extractable formaldehyde is a measure of free formaldehyde in the composition. For the determination of extractable formaldehyde, (Ext. $CH_2O$) a 100 gram sample of the oxymethylene copolymer composition was added to 100 ml of distilled water and refluxed at boiling for 60 minutes. The sample was neutralized with potassium hydroxide (0.10N) solution and the final pH noted. Fifty (50) milliliters of sodium sulfite solution 1.0N was added to the neutralized solution. This final solution was then titrated with sulfuric acid (0.10N) to the original pH level noted previously. A value for the formaldehyde level was calculated from the following formula:

$$\% \text{ Formaldehyde} = \frac{T_b \times N(H_2SO_4) \times 3.0}{\text{Sample wt. in grams}}.$$

$T_b$ = ml of acid
N = normality of $H_2SO_4$

## Table IV

| Composition | $K_d$ | Melt Index | Ext. CH2O |
|---|---|---|---|
| E | .028 | 24.6 | .065 |
| F | .124 | 9.4 | .041 |
| G | .008 | 9.0 | .023 |
| H | .040 | 9.1 | .028 |
| I | .017 | 9.7 | .046 |
| 2 | .011 | 9.0 | .041 |
| 3 | .033 | 8.5 | .042 |
| 4 | .011 | 8.6 | .029 |
| 5 | .011 | 8.9 | .024 |
| 6 | .012 | 8.9 | .039 |
| J | 1.030 | 12.7 | .134 |
| K | .530 | 13.4 | .174 |
| L | .880 | 11.5 | .049 |
| M | .800 | 15.5 | .129 |
| N | .580 | 14.9 | .208 |

Comparing oxymethylene copolymer compositions of the present invention, i.e., Compositions 2-6, to Controls E-I that contain only a superpolyamide compound as a stabilizer or Controls J-N that contain only cyanoguanidine as a stabilizer, reveals the superior thermal stability of the compositions of the present invention.

For example, the arithmetic average of the total values of $K_d$ for Compositions 2-6 is less than one-half that for Controls E-I and about one-fiftieth of that for Controls J-N. When compositions containing the same pigment are.compared, e.g. white (controls E and J and Invention 2), the minimum improvement (i.e., decrease) in average $K_d$ values by the present invention is to one-tenth that of the controls. The markedly lower $K_d$ values for compositions of the present invention is indicative of enhanced thermal stability. The presence of acid pigments in the control compositions initiates the polymer chain degradation that characterizes thermal instability of the controls. Yet the same acid pigments unexpectedly do not adversely affect the thermal stability of the compositions of the present invention.

Acid pigments also adversely affect the viscosity of the melt as can be seen from the higher melt index values for the controls as compared to compositions of the present invention. Acidic additives further produce free formaldehyde in the composition from chain degradation. This formaldehyde is converted to formic acid which accelerates degradation. While not as pronounced as the improvements seen in $K_d$ and melt index, the decreased percentage of free formaldehyde achieved by compositins of the present invention contributes to their enhanced stability as compared to the controls.

EXAMPLE 3

The oxymethylene copolymer compositions of Table V were compounded as in Example 1.

**Table V**

**Percent by Weight of Total Composition**

| Composition | Oxymethylene Copolymer | $MoS_2$ | Irganox 259 | Acrawax C | U10-01 | Elvamide 8063 | Cyanoguanidine | Melaamine |
|---|---|---|---|---|---|---|---|---|
| O | 96.70 | 2.0 | 0.50 | 0.20 | 0.50 | — | — | 0.10 |
| P | 95.80 | 2.0 | 0.50 | 0.20 | 0.50 | 1.00 | — | — |
| Q* | 96.50 | 2.0 | 0.50 | 0.20 | 0.50 | 0.25 | — | 0.05 |
| R | 96.55 | 2.0 | 0.50 | 0.20 | 0.50 | 0.25 | — | — |
| S | 96.70 | 2.0 | 0.50 | 0.20 | 0.50 | — | 0.10 | — |
| 7* | 96.50 | 2.0 | 0.50 | 0.20 | 0.50 | 0.25 | 0.05 | — |

* The equivalent weight ratios of cyanoguanidine to Elvamide 8063 and melanine are each about 1:1.

These compositions were evaluated for thermal stability by a determination of their extractable formaldehyde and decomposition rate at 230°C. in air. Table VI includes the results of this evaluation.

Table VI

Thermogravimetric Analysis at 230°C. in Air

| Composition | Ext. $CH_2O(90)$ | Extrap.*(Min.) | Rate** After 45 Min. (%/Min.) | Rate*** After Min. (%/Min. |
|---|---|---|---|---|
| O | 0.231 | 105 | 0.77 | 0.65 |
| P | 0.273 | 8 | 1.95 | 5.05 |
| Q | 0.244 | 8 | 2.00 | 4.25 |
| R | 0.337 | 5 | 2.17 | 5.01 |
| S | 0.236 | 105 | 0.71 | 0.30 |
| 7 | 0.185 | 143 | 0.26 | 0.20 |

* Extrapolated Time to Complete Decomposition (minutes) = Extrapolation of the initial slope on the curve of weight of composition vs. time to 100% decomposition

** Rate After 45 Min. = $\frac{\text{Total loss (\%) in wt. after 45 min.}}{\text{45 min.}}$

*** Rate After 45 Min. = $\frac{\text{Total loss (\%) in wt. after 20 min.}}{\text{20 min.}}$

It can be seen from Table VI that the performance of the oxymethylene copolymer /$MoS_2$/superpolyamide composition, i.e., comparison Composition P, is not significantly inferior as compared to that of the oxymethylene copolymer /$MoS_2$/superpolyamide/melamine composition, i.e., comparison Composition Q. Yet the composition of the present invention, i.e., Composition 7, that includes oxymethylene copolymer /$MoS_2$/superpolyamide/cyanoguaidine, exhibits unexpectedly superior thermal stability to every comparison composition O-S. That is, the superpolyamide cyanoguanidine oxymethylene polymer stabilizer system of the present invention is not only unexpectedly superior to a superpolyamide-melamine stabilizer system, but exhibits surprising thermal stability properties as compared to a superpolyamide, melamine, or cyanoguanidine stabilizer system.

While the invention has been described in terms of various preferred embodiments, the skilled artisan will appreciate that various modifications, substitutions, omissions, and changes may be made without departing from the spirit thereof. Accordingly, it is intended that the scope of the present invention be limited solely by the scope of the following claims.

## Claims

1. A stabilized oxymethylene polymer composition, comprising: an oxymethylene polymer and a stabilizing amount of a stabilizer system comprising (a) at least one amidine compound having a pK greater than about 7; and (b) at least one superpolyamide compound.

2. The composition of Claim 1, wherein said amidine compound is selected from the group consisting of cyanoguanidines, guanidines, triazines, and ureas.

3. The composition of Claim 2, wherein said amidine compound is cyanoguanidine.

4. The composition of Claim 1, wherein said superpolyamide compound is a terpolymer having a melting point below that of said oxymethylene polymer.

5. The composition of Claim 4, wherein said terpolymer is of nylon 6, nylon 6,6, and nylon 6,10.

6. The composition of Claim 4, wherein said terpolymer has a melting point below about 150°C.

7. The composition of Claim 1, where said amidine compound is cyanoguanidine and said superpolyamide compound is a terpolymer of nylon 6, nylon 6,6, and nylon 6,10.

8. The composition of Claim 1, further comprising (c) an acidic additive.

9. The composition of Claim 8, wherein said acidic additive is selected from the group consisting of $MoS_2$, pigments antistatic agents, minerals, organotitanates, coupling agents, carbon black, fillers, impact modifiers, glass, sizing agents, flame retardants, low wear modifiers, and mixtures thereof.

10. The composition of Claim 1, wherein said oxymethylene polymer is a trioxane-ethylene oxide copolymer containing about 98 weight percent or recurring $-OCH_2$ groups and about 2 weight percent of comonomer units derived from ethylene oxide having the formula $-OCH_2\,CH_2-$.

11. The composition of Claim 1, wherein said cyanoguanidine is of the formula

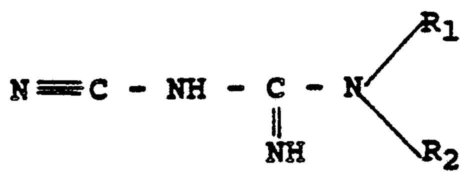

wherein $R_1$ and $R_2$ may be the same or different inert substituents.

12. The composition of Claim 11, wherein $R_1$ and $R_2$ are selected from the group consisting of hydrogen, alkyl, aryl, cycloalkyl, hydroxyalkyl, haloalkyl, and haloaryl.

13. The composition of Claim 1, wherein said oxymethylene polymer is an oxymethylene homopolymer.

14. The composition of Claim 1, wherein said oxymethylene polymer is an oxymethylene copolymer.

15. A stabilized oxymethylene polymer composition, comprising: an oxymethylene polymer and a stabilizer system comprising:

(a) at least one amidine compound having a pK greater than about 7; and

(b) at least one superpolyamide;

wherein the equivalent weight ratio of said amidine compound to said superpolyamide compound is in the range of from about 10:1 to about 1:5.

16. The composition of Claim 15, wherein said ratio is from about 8:1 to about 1:3.

17. The composition of Claim 15, wherein said ratio is from about 6:1 to about 1:2.

18. The composition of Claim 15, wherein said ratio is from about 2:1 to about 1:2.

19. The composition of Claim 15, wherein said ratio is about 1:1.

20. The composition of Claim 15, wherein said oxymethylene polymer is present in an amount of from about 96 to about 99.5 percent by weight.

21. The composition of Claim 15, wherein said oxymethylene polymer is present in an amount of from about 98.5 to about 99.1 percent by weight.

22. The composition of Claim 15, wherein said amidine compound is present in an amount of from .01 to about 1 percent by weight.

23. The composition of Claim 22, wherein said superpolyamide compound is present in an amount of from .01 to about 1 percent by weight.

24. The composition of Claim 15, wherein said stabilizer system comprises .02 percent to 0.2 percent by weight of said amidine compound, and .05 percent to 0.5 percent of said superpolyamide compound.

25. The composition of Claim 15, wherein stabilizer system comprises .04 percent 0.1 percent by weight of said amidine compound, and 0.1 percent to 0.4 percent by weight of said superpolyamide compound.

26. The composition of Claim 15, further comprising (c) an acidic additive.

27. The composition of Claim 15, wherein amidine compound is of the formula

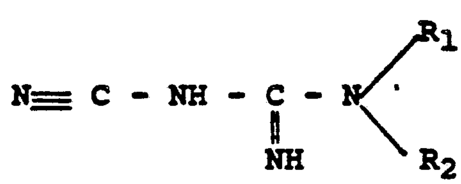

wherein $R_1$ and $R_2$ may be the same of different inert substituents.

28. The composition of Claim 27, wherein $R_1$ and $R_2$ are selected from the group consisting of hydrogen, alkyl, aryl cycloalkyl, hydroxyalkyl, haloalkyl, and haloaryl.

29. The composition of Claim 15, wherein said superpolyamide compound is a terpolymer having a melting point below that of said oxymethylene polymer.

30. The composition of Claim 28, wherein said terpolymer is of nylon 6, nylon 6,6 and nylon 6,10.

31. The composition of Claim 28, wherein said terpolymer has a melting point below about 150°C.

32. The composition of Claim 15, wherein said superpolyamide compound is a terpolymer of nylon 6, nylon 6,6 and nylon 6,10 and said amidine compound is cyanoguanidine.

33. The composition of Claim 15, wherein said oxymethylene polymer is a trioxane-ethylene oxide copolymer containing about 98 weight percent of comonomer units derived from ethylene oxide having the formula $-OCH_2CH_2$.

34. The composition of Claim 26 wherein said acidic additive is selected from the group consisting of $MoS_2$, pigments, antistatic agents, minerals, organotitanates, coupling agents, carbon black, fillers, impact modifiers, glass, sizing agents, flame retardants, low wear modifiers, and mixtures thereof.

35. A stabilized oxymethylene polymer composition, comprising: an oxymethylene copolymer and a stabilizing amount of a stabilizer system comprising cyanoguanidine and a terpolymer of nylon 6, nylon 6,6, and nylon 6,10.

36. A stabilized oxymethylene polymer composition, comprising: an oxymethylene copolymer and a stabilizer system comprising cyanoguanidine and a terpolymer of nylon 6, nylon 6,6, and nylon 6,10; and wherein the equivalent weight ratio of cyanoguanidine to said terpolymer is about 1:1.